(19) Europäisches Patentamt
European Patent Office
Office européen des brevets

(11) **EP 3 572 776 B1**

(12) **EUROPÄISCHE PATENTSCHRIFT**

(45) Veröffentlichungstag und Bekanntmachung des Hinweises auf die Patenterteilung:
**02.11.2022 Patentblatt 2022/44**

(21) Anmeldenummer: **19173782.4**

(22) Anmeldetag: **10.05.2019**

(51) Internationale Patentklassifikation (IPC):
***G01F 22/00*** *(2006.01)* ***G01F 23/292*** *(2006.01)*

(52) Gemeinsame Patentklassifikation (CPC):
**G01F 23/292; G01F 22/00**

(54) **BEMESSUNGSHILFE**

MEASURING AID

AIDE À LA MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.05.2018 DE 102018208218**

(43) Veröffentlichungstag der Anmeldung:
**27.11.2019 Patentblatt 2019/48**

(73) Patentinhaber: **BSH Hausgeräte GmbH**
**81739 München (DE)**

(72) Erfinder:
• **Bui Tran, Duc Hanh**
**81247 München (DE)**
• **Campos Medina, Ana Carolina**
**78216 San Luis; S.L.P. (MX)**
• **Gonzalez Carrera, Hector Alejandro**
**64630 Monterrey (MX)**

(56) Entgegenhaltungen:
| | |
|---|---|
| **EP-A1- 3 275 348** | **EP-A2- 3 026 404** |
| **WO-A1-2017/137832** | **WO-A2-01/60718** |
| **DE-A1-102011 075 194** | **RU-C1- 2 187 079** |
| **US-A1- 2017 023 394** | |

Processed by Luminess, 75001 PARIS (FR)

**Beschreibung**

Die Erfindung betrifft die Bemessung eines in ein Gefäß einzufüllenden Volumens. Insbesondere betrifft die Erfindung die Bemessung einer Zutat bei der Zubereitung einer Speise.

Zur Zubereitung einer Speise werden üblicherweise vorbestimmte Mengen von Zutaten in einem Gefäß miteinander vermengt. Das Abmessen einer Zutat kann den Zubereitungsprozess unterbrechen und zusätzliches Gerät erfordern, beispielsweise eine Waage oder einen Messbecher. In beiden können Reste der abgemessenen Zutat zurückbleiben, wodurch ein Teil der Zutat verloren gehen und das Rezept verfälscht werden kann.

Zur Erleichterung der Bemessung einer Zutat wurden verschiedene Vorschläge gemacht. Beispielsweise kann ein Löffel mit einer integrierten Waage verwendet werden. Ein solcher Löffel ist aber für die weitere Verarbeitung von Zutaten nur bedingt geeignet.

US 9,460,562 B2 schlägt eine am Kopf eines Benutzers angebrachte Kamera vor, mittels derer optische Größenverhältnisse von Objekten bestimmt werden. Daraus kann die Größe eines Innenraums des Gefäßes bestimmt werden. EP 3 026 404 A2 offenbart die Verwendung einer Reflexionslichtschranke, die in geeigneter Weise gegenüber einem mit einem Material, hier insbesondere mit einer Flüssigkeit und/oder mit einem Granulat, zu befüllenden Behälter positioniert ist, um einer das Material abgebenden Dosiereinrichtung zu ermöglichen, ein Füllvolumen des Behälters zu erfassen oder sensorisch abzuschätzen.

Eine der vorliegenden Erfindung zu Grunde liegende Technik besteht in der Bereitstellung einer verbesserten Technik, mit der eine Bemessung einer Zutat beispielsweise beim Zubereiten einer Speise vereinfacht werden kann. Die Erfindung löst diese Aufgabe mittels der Gegenstände der unabhängigen Ansprüche. Unteransprüche geben bevorzugte Ausführungsformen wieder.

Ein erfindungsgemäßes Verfahren zur Vereinfachung einer Bemessung einer Substanz beim Zubereiten einer Speise, umfasst Schritte des Bereitstellens eines Rezeptes; des Bestimmens einer in ein Gefäß einzufüllenden Substanz basierend auf dem Rezept; des Bestimmens eines in das Gefäß einzufüllenden Volumens der einzufüllenden Substanz; des optischen Abtastens eines Innenraums des Gefäßes von einer vorbestimmten Höhe über dem Gefäß aus; des Bestimmens eines Füllstands, den das Volumen nach seinem Einfüllen im Gefäß bewirkt; und des Anzeigens des bestimmten Füllstands, wobei eine auf den bestimmten Füllstand hinweisende Marke an eine Wand des Gefäßes projiziert wird. Die einzufüllende Substanz kann eine Zutat umfassen. Das einzufüllende Volumen der einzufüllenden Substanz kann auf der Basis des Gewichts der einzufüllenden Substanz und einer Massendichte der Substanz bestimmt werden. Auf diese Weise kann ein Nutzer beim Kochen unterstützt werden.

Durch die vorbestimmte Höhe, aus der das Gefäß optisch abgetastet wird, kann ein Volumen des Innenraums verbessert bestimmt werden. Insbesondere kann leichter bestimmt werden, welcher Füllstand sich nach dem Einfüllen des Volumens am Gefäß ergeben sollte. Das Verfahren ist allgemein für ein Volumen einer Flüssigkeit oder eines Schüttguts geeignet und kann besonders bevorzugt im Rahmen der Zubereitung eines Gerichts durchgeführt werden. Hier kann das Volumen beispielsweise Wasser, Milch, Öl oder Wein betreffen. Das Schüttgut kann etwa Zucker, Mehl oder Grieß umfassen. Das Volumen kann beispielsweise aus einem Rezept vorgegeben sein. Das Verfahren kann an einem beliebigen Gefäß angewendet werden. Das Gut, von dem das vorbestimmte Volumen in das Gefäß einzufüllen ist, kann beliebig sein.

Das Gefäß kann an einer Arbeitsfläche anliegen, wobei die Abtastung aus einer vorbestimmten Höhe über der Arbeitsfläche erfolgt. In einer einfachen Ausführungsform kann das Gefäß auf der Arbeitsfläche stehen. Insbesondere wenn das Gefäß auf seiner Innenseite regelmäßig geformt ist, kann der sich ergebende Füllstand leicht bestimmt werden. Es kann aber auch ein gegenüber der Arbeitsfläche geneigtes Gefäß abgetastet werden. Die Neigung kann es einem Benutzer erleichtern, einen Inhalt des Gefäßes zu bearbeiten, beispielsweise durch Rühren. Das Anliegen an der Arbeitsfläche kann sicherstellen, dass vorbestimmte Abstände eingehalten sind, sodass eine Bestimmung von geometrischen Verhältnissen des Gefäßes aufgrund eines Bildes der optischen Abtastung korrekt ist.

Alternativ dazu kann die Form des Innenraums auf der Basis der Abtastung bestimmt werden. Dazu können mehrere Abtastungen aus unterschiedlichen Perspektiven nach Art einer Stereo-Kamera erfolgen. Es kann auch eine Tiefenkamera verwendet werden, die Entfernungsinformationen beispielsweise auf der Basis der Ausbreitungsgeschwindigkeit von Licht bereitstellen kann. Der Innenraum kann so als dreidimensionaler Hohlkörper abgetastet werden.

Die Form des Innenraums kann unter Berücksichtigung eines sich im Innenraum befindlichen Objekts bestimmt werden. Befindet sich beispielsweise eine andere Zutat bereits im Gefäß, so kann der für das einzufüllende Volumen zur Verfügung stehende Platz bestimmt werden, indem die andere Zutat als Teil des Gefäßes interpretiert wird. Die andere Zutat kann beispielsweise eine Flüssigkeit umfassen, die einen üblicherweise zur Arbeitsfläche parallelen Spiegel bildet, oder ein Schüttgut, das einen Konus oder Hügel im Gefäß bilden kann. Auch eine unregelmäßig geformte Zutat wie ein Stück Butter kann optisch abgetastet und berücksichtigt werden.

Gemäß dem Verfahren wird eine auf den bestimmten Füllstand hinweisende Marke an eine Wand des Gefäßes projiziert. Die Projektion kann auf der Innenseite des Gefäßes erfolgen, sodass ein Benutzer leicht ein so großes Volumen des hinzuzufügenden Guts einfüllen kann wie vorbestimmt. Ist ein Material des Gefäßes transparent, so kann die Projektion auch auf der Außenseite erfolgen. Zur Projektion kann beispielsweise ein Bildprojektor oder ein steuerbarer Laserzeiger verwendet werden.

Das einzufüllende Volumen kann auf der Basis des Gewichts der einzufüllenden Substanz und einer Massendichte der Substanz bestimmt werden. Dazu kann ein Katalog von Massendichten unterschiedlicher Güter vorgehalten sein. So kann leicht bestimmt werden, welches Volumen beispielsweise 200 g Mehl oder 200 g gemahlene Mandeln einnehmen.

Ein sich im Gefäß einstellender Füllstand kann in Abhängigkeit eines eingefüllten Volumens bestimmt werden. Insbesondere kann ein Zusammenhang zwischen dem Füllstand und dem Volumen nach Art einer Funktion oder einer Tabelle bestimmt werden. Diese Bestimmung kann für einen folgenden Einfüllvorgang weiter verwendet werden. Der Zusammenhang kann auch ein unregelmäßig geformtes oder teilweise mit einem Objekt ausgefülltes Gefäß berücksichtigen.

Eine erfindungsgemäße Vorrichtung zur Vereinfachung einer Bemessung einer Substanz beim Zubereiten einer Speise, umfasst eine optische Abtasteinrichtung, die zur Anbringung in einer vorbestimmten Höhe über einem Gefäß eingerichtet ist, wobei die optische Abtasteinrichtung zur optischen Abtastung eines Innenraums des Gefäßes eingerichtet ist; eine Verarbeitungseinrichtung, die dazu eingerichtet ist, eine in ein Gefäß einzufüllende Substanz basierend auf einem Rezept zu bestimmen; ein in das Gefäß einzufüllendes Volumen der einzufüllenden Substanz zu bestimmen und einen Füllstand zu bestimmen, den das Volumen nach seinem Einfüllen im Gefäß bewirkt; und eine Anzeigeeinrichtung zur Anzeige des bestimmten Füllstands, wobei die Anzeigeeinrichtung als Projektor ausgestaltet ist zur Projektion einer auf den bestimmten Füllstand hinweisenden Marke an eine Wand des Gefäßes. Die Verarbeitungseinrichtung kann weiter dazu eingerichtet sein, ein in das Gefäß einzufüllendes Volumen der einzufüllenden Substanz auf der Basis eines Gewichts der einzufüllenden Substanz und einer Massendichte der Substanz zu bestimmen.

Die Abtasteinrichtung kann insbesondere eine oder mehrere Kameras, eine Stereo-Kamera oder eine Tiefenkamera umfassen. Die Anzeigevorrichtung kann insbesondere einen Bildprojektor oder steuerbaren Laserzeiger umfassen, die dazu eingerichtet sind, eine auf einen einzunehmenden Füllstand hinweisende Marke am Gefäß darzustellen.

Die Verarbeitungseinrichtung ist bevorzugt dazu eingerichtet, ein hierin beschriebenes Verfahren teilweise oder vollständig durchzuführen. Dazu kann die Verarbeitungseinrichtung als programmierbarer Mikrocomputer oder Mikrocontroller ausgebildet sein und das Verfahren kann in Form eines Computerprogrammprodukts mit Programmcodemitteln vorliegen. Das Computerprogrammprodukt kann auch auf einem computerlesbaren Datenträger abgespeichert sein. Vorteile oder Merkmale des Verfahrens können auf die Vorrichtung übertragen werden und umgekehrt.

Die optische Abtasteinrichtung kann als Tiefenkamera ausgebildet sein, die zur Bestimmung von Entfernungen von Punkten einer Begrenzung des Innenraums von der Tiefenkamera eingerichtet ist. Die Tiefenkamera kann eine Einrichtung zur Entfernungsbestimmung umfassen, beispielsweise nach Art eines LiDAR oder einer Stereo-Kamera. Eine optische Kamera zur Bereitstellung eines zweidimensionalen Bilds kann zusätzlich verwendet werden.

Die Vorrichtung umfasst wie beschrieben einen Projektor zur Projektion einer auf den bestimmten Füllstand hinweisende Marke an eine Wand des Gefäßes. Der Projektor kann mit der Kamera und gegebenenfalls der Tiefenkamera integriert ausgeführt sein. Insbesondere kann die Vorrichtung mit einer Interaktionseinrichtung kombiniert ausgeführt sein, die dazu eingerichtet ist, über einer Arbeitsfläche in einer Küche angebracht zu werden. Eine Funktion der Interaktionseinrichtung wie die Verwaltung oder Darstellung eines Kochrezepts können durch die beschriebene Vorrichtung oder das beschriebene Verfahren ergänzt oder unterstützt werden.

Merkmale, die mit Bezug auf eine Anspruchskategorie erläutert wurden, können analog auf alle anderen Anspruchskategorien angewendet werden.

Die Erfindung wird nun unter Bezug auf die beiliegenden Figuren genauer beschrieben, in denen:

Figur 1     ein System mit einer Vorrichtung zur Unterstützung eines Bemessungsvorgangs;
Figur 2     ein Ablaufdiagramm eines Verfahrens;
Figur 3     eine Seitenansicht eines pyramiden- oder kegelförmigen Gefäßes; und
Figur 4     eine Seitenansicht eines Gefäßes, in welches mittels des Projektors eine Marke projiziert wird,

darstellt.

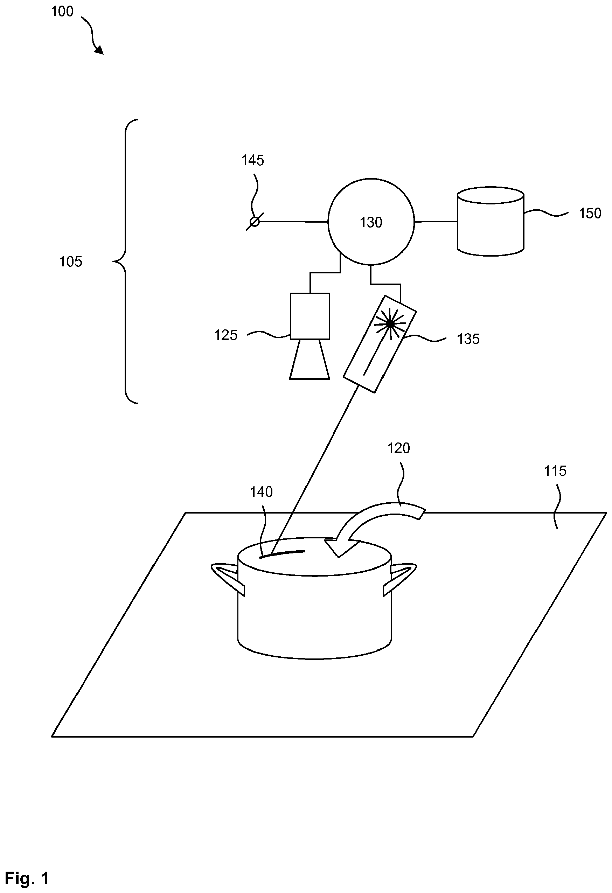

Figur 1 zeigt ein System 100 mit einer Vorrichtung 105 zur Unterstützung eines Bemessungsvorgangs. Ein Gefäß oder Behälter 110 befindet sich in Kontakt mit einer Arbeitsfläche 115. In einer vorbestimmten Höhe über der Arbeitsfläche 115 ist die Vorrichtung 105 derart angebracht, dass ein optischer Pfad zum Gefäß 110 möglichst frei und unverstellt ist. Das Gefäß 110 kann beispielsweise einen Topf oder eine Schüssel umfassen und die Arbeitsfläche 115 kann eine Heizeinrichtung umfassen, die dazu eingerichtet sein kann, das Gefäß 110 zu erwärmen.

In das Gefäß 110 soll ein vorbestimmtes Volumen eines Guts 120 oder einer Substanz eingefüllt werden, die bevorzugt zumindest bedingt fließfähig ist, sodass nach dem Einfüllen ein Füllstand im Gefäß 110 bestimmt werden kann. Dazu kann das Gut 120 beispielsweise ein Fluid wie Wasser oder ein Schüttgut wie Weizengrieß umfassen. Der Füllstand, auch Standhöhe genannt, ist bestimmt als die Höhe von fließfähigem Material in dem Gefäß 110.

Die Vorrichtung 105 umfasst eine optische Abtasteinrichtung 125, eine Verarbeitungseinrichtung 130 und eine Anzeigeeinrichtung 135. Die Abtasteinrichtung 125 ist dazu eingerichtet, einen Innenraum des Gefäßes 110 optisch abzutasten. Die Verarbeitungseinrichtung ist dazu eingerichtet, einen Füllstand zu bestimmen, der sich nach dem Einfüllen eines vorbestimmten Volumens in dem Gefäß 110 einstellt. Die Anzeigeeinrichtung 135 ist dazu eingerichtet, den bestimmten Füllstand anzuzeigen. Dazu kann die Anzeigevorrichtung 135 dazu eingerichtet sein, den bestimmten Füllstand unmittelbar am Gefäß 110 anzuzeigen. Erfindungsgemäß wird eine optische Marke 140 auf das Gefäß 110 mittels eines Projektors geworfen.

Optional umfasst ist die Verarbeitungseinrichtung 130 mit einer Schnittstelle 145 verbunden, über die das einzufüllende Volumen entgegen genommen werden kann. Alternativ können auch das einzufüllende Gut 120 und die einzufüllende Masse über die Schnittstelle 145 erfasst werden. Das Volumen kann dann auf der Basis einer Massendichte des Guts 120 bestimmt werden. Massendichten eines oder mehrerer verschiedener Güter können in einer Speichervorrichtung 150 abgelegt sein.

Die Vorrichtung 105 kann auch mit einem Interaktionssystem integriert ausgeführt sein, das dazu eingerichtet ist, eine Geste eines Benutzers im Bereich der Arbeitsfläche 115 zu erfassen, zu verarbeiten und eine Projektion im Bereich der Arbeitsfläche 115 zu steuern. Beispielsweise kann das Interaktionssystem dazu eingerichtet sein, einen Benutzer durch Verarbeitungsschritte eines Kochrezepts zu führen. Aus dem Rezept, das beispielsweise über die Schnittstelle 145 empfangen werden oder in der Speichervorrichtung 150 abgelegt sein kann, können eine Menge oder ein Volumen eines in das Gefäß 110 einzufüllenden Guts 120 entnommen werden.

Die Vorrichtung 105 kann beispielsweise in einer Küche über der Arbeitsfläche 115 angebracht werden, indem es an einer Wand oder einem über der Arbeitsfläche 115 angebrachten Möbel befestigt wird. Das Möbel kann insbesondere einen Schrank oder ein Regal umfassen. Üblicherweise sind die Komponenten der Vorrichtung 105 in einem Gehäuse aufgenommen, das sie vor Verunreinigung insbesondere durch Wasser oder Lebensmittel schützt.

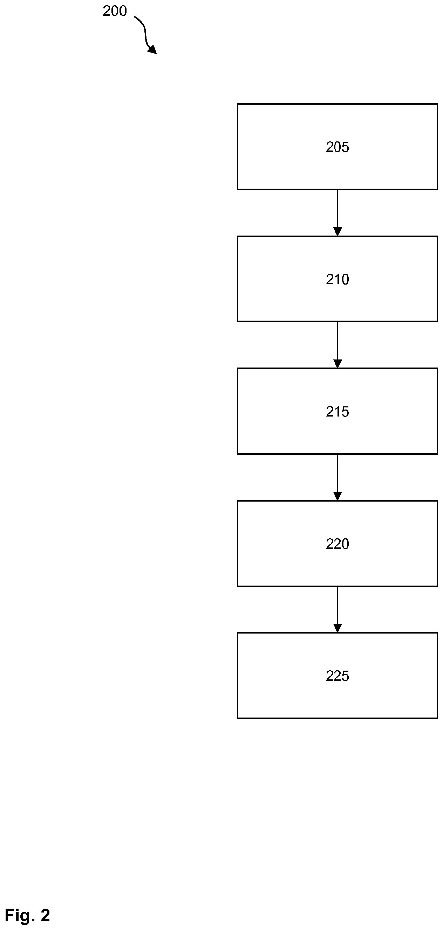

Figur 2 zeigt ein Ablaufdiagramm eines Verfahrens 200 zur Unterstützung eines Bemessungsvorgangs. Das Verfahren 200 kann insbesondere in Verbindung mit der Vorrichtung 105 durchgeführt werden. In einem ersten Schritt 205 wird ein in das Gefäß 110 einzufüllendes Volumen bestimmt. Dazu kann das einzufüllende Gut 120 zu berücksichtigen sein, beispielsweise um das Volumen aus einer Massenangabe zu bestimmen. In einem Schritt 210 wird das Gefäß 110 optisch abgetastet.

Um zu bestimmen, in welcher Höhe über der Arbeitsfläche 115 der Füllstand nach dem Einfüllen des Volumens liegt, kann in einem Schritt 215 das durch das Gut 120 einnehmbare Volumen des Innenraums des Gefäßes 110 auf der Basis der optischen Abtastung bestimmt werden. Die Form des freien Volumens kann bestimmt und auf deren ein Zusammenhang zwischen dem Füllstand und einem eingefüllten Volumen bestimmt werden. Handelt es sich beispielsweise um ein Gefäß 110, dessen Innenraum die Form eines Zylinders aufweist, der auf der Arbeitsfläche 115 steht, so kann ein linearer Zusammenhang vorliegen. Ein Proportionalitätsfaktor kann dabei von der Größe einer Bodenfläche des Zylinders abhängig sein. Auch andere Formen des Innenraums können einen linearen Zusammenhang definieren, beispielsweise ein Quader oder ein schiefer Zylinder. Liegt eine komplexere Form vor, so können das freie Volumen und der erwartete Füllstand unter Umständen geometrisch bestimmt werden. Grundlage für derartige Bestimmungen sind üblicherweise Längen oder Abstände, die auf der Basis der optischen Abtastung bestimmt werden können. Der Innenraum kann auch aus mehreren Formen zusammengesetzt sein, die einzeln behandelt werden können. So kann beispielsweise der Innenraum die Form eines auf einem geraden Kreiszylinder ruhenden umgedrehten Kegelstumpfs aufweisen.

Das Volumen, die Form oder der Zusammenhang zwischen Füllstand und freiem Volumen kann für ein vorbestimmtes Gefäß 110 bekannt sein. Entsprechende Informationen können im Datenspeicher 150 abgelegt sein. Können mehrere Gefäße 110 verwendet werden, so können diese anhand optischer Merkmale, eines optischen Codes - etwa eines Strich- oder QR-Codes - oder beispielsweise mittels eines RFID-Tags identifiziert werden. Ein entsprechendes Lesegerät kann von der Vorrichtung 105 umfasst sein.

In einem Schritt 220 wird der Füllstand des Gefäßes 110 bestimmt, wenn das vorbestimmte Volumen eingefüllt ist. Diese Bestimmung kann auf der Basis des zuvor bestimmten Zusammenhangs zwischen Füllstand und freiem Volumen erfolgen. In einem Schritt 225 wird der bestimmte Füllstand angezeigt. Dazu wird die Marke 140 an das Gefäß 110 projiziert, sodass ein Benutzer nur solange vorbestimmtes Gut 120 in das Gefäß 110 füllen muss, bis der von ihm beobachtbare Füllstand die Marke 140 erreicht hat.

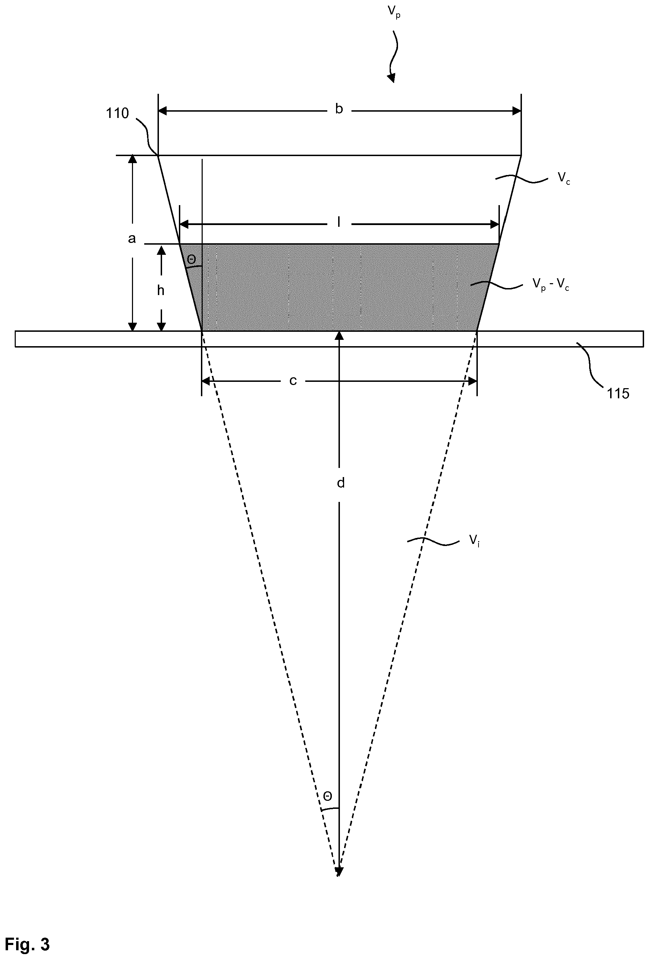

Figur 3 zeigt ein konisches Gefäß 110 im Querschnitt. Das Gefäß 110 kann beispielsweise einen kegelförmigen oder pyramidenförmigen Innenraum aufweisen. Der dunkel dargestellte Bereich ist bereits gefüllt, sodass der darüber hell dargestellte Bereich als freies Volumen $V_c$ zur Aufnahme des Guts 120 bereitsteht. Das gesamte Volumen des Innenraums des Gefäßes 110 sei $V_p$ und wird als bekannt angenommen. Die Dicke eines Bodens oder einer Wand des Gefäßes 110 wird nicht betrachtet. Der Füllstand ist als h bezeichnet. Die Marke 140 kann dargestellt werden, wenn entweder h oder die Länge der Linie l bekannt ist, die auf der Innenseite des Gefäßes 110 parallel zur Arbeitsfläche 115 auf Höhe des Füllstands verläuft. Es gilt:

$$V_C = \frac{1}{3} * \pi * \left( \left( \frac{b}{2} \right)^2 + \left( \frac{b}{2} \right) * \left( \frac{c}{2} \right) + \left( \frac{c}{2} \right)^2 \right) * a$$

$$V_P = \frac{1}{3} * (b^2 + b * c + c^2) * a$$

Zur weiteren Bestimmung kann ein imaginäres Volumen $V_i$ betrachtet werden, das den Kegelstumpf des Innenraums zu einem Kegel vervollständigt. Eine entsprechende Betrachtung gilt für einen Pyramidenstumpf und eine Pyramide. Es gilt:

$$V_T = V_R + V_i$$

$$V_{T_C} = \frac{1}{3} * \pi * \left( \frac{l}{2} \right)^2 * (d + h)$$

$$V_{T_P} = \frac{1}{3} * l^2 * (d + h)$$

Daraus folgt:

$$V_{i_C} = \frac{1}{3} * \pi * \left( \frac{c}{2} \right)^2 * d$$

$$V_{i_P} = \frac{1}{3} * c^2 * d$$

Zur Bestimmung der Höhe d des imaginären Volumens $V_i$ muss der Neigungswinkel $\Theta$ der seitlichen Begrenzung des Gefäßes 110 bestimmt werden:

$$\tan(\theta) = \frac{b - c}{2a}$$

$$\tan(\theta) = \frac{\frac{c}{2}}{d} = \frac{c}{2d}$$

$$d = \frac{c}{2 \tan(\theta)} = \frac{c}{\frac{2(b - c)}{2a}} = \frac{ac}{b - c}$$

$$d = \frac{ac}{b - c}$$

Ein Zusammenhang zwischen d und h kann ebenfalls auf der Basis des Tangenssatzes hergestellt werden:

$$\tan(\theta) = \frac{b-c}{2a} = \frac{\frac{l}{2}}{d+h} = \frac{l}{2(d+h)}$$

$$\therefore \quad l = \frac{2(d+h)*(b-c)}{2a} \qquad \therefore \quad l = \frac{(d+h)(b-c)}{a}$$

Hiermit lassen sich die eingangs genannten Volumengleichungen weiter bearbeiten. Für ein kegelförmiges Gefäß 110 gilt:

$$V_{T_C} = \frac{1}{3}\pi \left(\frac{l}{2}\right)^2 (d+h)$$

$$V_{i_C} = \frac{1}{3}\pi \left(\frac{c}{2}\right)^2 d$$

$$V_{T_C} = V_{R_C} + V_{i_C} \qquad \therefore \qquad \frac{1}{3}\pi \left(\frac{l}{2}\right)^2 (d+h) = V_{R_C} + V_{i_C}$$

$$\frac{1}{3}\pi \left(\frac{(d+h)(b-c)}{2a}\right)^2 (d+h) = V_{R_C} + V_{i_C}$$

$$\frac{1}{3}\pi \left(\frac{(b-c)}{2a}\right)^2 (d+h)^3 = V_{R_C} + V_{i_C}$$

$$(d+h)^3 = \frac{3}{\pi}\left(V_{R_C} + V_{i_C}\right)\left(\frac{2a}{b-c}\right)^2$$

$$h = \sqrt[3]{\frac{3}{\pi}\left(V_{R_C} + V_{i_C}\right)\left(\frac{2a}{b-c}\right)^2} - d$$

$$h = \sqrt[3]{\frac{3}{\pi}\left(V_{R_C} + \frac{1}{3}\pi\left(\frac{c}{2}\right)^2 d\right)\left(\frac{2a}{b-c}\right)^2} - d$$

Damit lässt sich die Länge der Linie I bestimmen:

$$l = \frac{(d+h)(b-c)}{a} = \frac{\left(\sqrt[3]{\frac{3}{\pi}\left(V_{R_C} + \frac{1}{3}\pi\left(\frac{c}{2}\right)^2 d\right)\left(\frac{2a}{b-c}\right)^2}\right)(b-c)}{a}$$

Für ein pyramidenförmiges Gefäß 110 gilt:

$$V_{T_P} = \frac{1}{3}l^2(d+h)$$

$$V_{i_P} = \frac{1}{3}c^2 d$$

$$V_{T_P} = V_{R_P} + V_{i_P} \qquad \therefore \qquad \frac{1}{3}l^2(d+h) = V_{R_P} + V_{i_P}$$

$$\frac{1}{3}\left(\frac{(d+h)(b-c)}{a}\right)^2 (d+h) = V_{R_P} + V_{i_P}$$

$$\frac{1}{3}\left(\frac{(b-c)}{a}\right)^2 (d+h)^3 = V_{R_P} + V_{i_P}$$

$$(d+h)^3 = 3(V_{R_P} + V_{i_P})\left(\frac{a}{b-c}\right)^2$$

$$h = \sqrt[3]{3(V_{R_P} + V_{i_P})\left(\frac{a}{b-c}\right)^2} - d$$

$$h = \sqrt[3]{3\left(V_{R_P} + \frac{1}{3}c^2 d\right)\left(\frac{a}{b-c}\right)^2} - d$$

Daraus folgt die Länge der Linie I:

$$l = \frac{(d+h)(b-c)}{a} = \frac{\left(\sqrt[3]{3\left(V_{R_P} + \frac{1}{3}c^2 d\right)\left(\frac{a}{b-c}\right)^2}\right)(b-c)}{a}$$

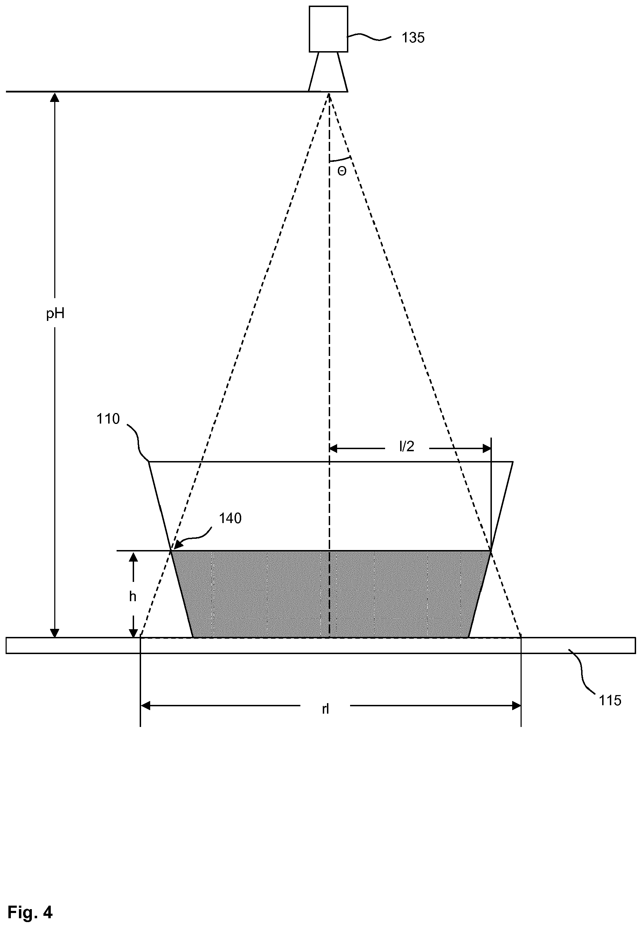

Figur 4 zeigt eine Seitenansicht eines Gefäßes 110, in welches mittels des Projektors 135 eine Marke 140 projiziert wird. Der Winkel Θ entspricht dem von Figur 3. Der vom Projektor 135 ausgesandte Lichtkegel bildet auf der Arbeitsfläche 115 einen Fleck mit einem Durchmesser von rl. Für eine vorbestimmte Projektorhöhe pH des Projektors 135 über der Arbeitsfläche 115 gilt:

$$\tan(\theta) = \frac{\frac{l}{2}}{pH - h} = \frac{l}{2(pH - h)}$$

$$\tan(\theta) = \frac{\frac{rl}{2}}{pH} = \frac{rl}{2pH}$$

$$\frac{rl}{2pH} = \frac{l}{2(pH - h)} \quad \therefore \quad rl = \frac{l * pH}{pH - h}$$

So kann eine Projektion gesteuert werden, bei welcher der Lichtfleck auf der Arbeitsfläche 115 einen Durchmesser hätte, der den ausgesandten Lichtkegel in der korrekten Höhe h auf eine innere Begrenzung des Gefäßes 110 treffen lässt. Wird das Gut 120 in das Gefäß eingefüllt, so ist der vorbestimmte Füllstand überschritten, wenn nur ein konzentrischer Teil der Oberfläche des eingefüllten Guts 120 vom Projektor beleuchtet wird.

Bezugszeichen

| 100 | System |
|-----|--------|
| 105 | Vorrichtung |
| 110 | Gefäß |
| 115 | Arbeitsfläche |
| 120 | Substanz, Gut |
| 125 | optische Abtasteinrichtung |
| 130 | Verarbeitungseinrichtung |
| 135 | Anzeigeeinrichtung |
| 140 | Marke |

| 200 | Verfahren |
|-----|-----------|
| 205 | einzufüllendes Volumen bestimmen |
| 210 | Gefäß abtasten |
| 215 | Innenraum bestimmen |
| 220 | Füllstand mit eingefülltem Volumen bestimmen |
| 225 | bestimmten Füllstand anzeigen |

**Patentansprüche**

1. Verfahren (200) zur Vereinfachung einer Bemessung einer Substanz, insbesondere einer Zutat, beim Zubereiten einer Speise, folgende Schritte umfassend:

   - Bereitstellen eines Rezeptes;
   - Bestimmen einer in ein Gefäß (110) einzufüllenden Substanz basierend auf dem Rezept;
   - Bestimmen (205) eines in das Gefäß (110) einzufüllenden Volumens der einzufüllenden Substanz;
   - optisches Abtasten (210) eines Innenraums des Gefäßes (110) von einer vorbestimmten Höhe über dem Gefäß (110) aus;
   - Bestimmen (215) eines Füllstands, den das Volumen nach seinem Einfüllen im Gefäß (110) bewirkt;
   - Anzeigen (220) des bestimmten Füllstands, wobei eine auf den bestimmten Füllstand hinweisende Marke an eine Wand des Gefäßes (110) projiziert (225) wird.

2. Verfahren (200) nach Anspruch 1, wobei das Gefäß (110) an einer Arbeitsfläche (115) anliegt und die Abtastung aus einer vorbestimmten Höhe (pH) über der Arbeitsfläche (115) erfolgt.

3. Verfahren (200) nach Anspruch 1 oder 2, wobei die Form des Innenraums auf der Basis der Abtastung bestimmt (215) wird.

4. Verfahren (200) nach Anspruch 3, wobei die Form des Innenraums unter Berücksichtigung eines sich im Innenraum befindlichen Objekt bestimmt (215) wird.

5. Verfahren (200) nach einem der vorangehenden Ansprüche, wobei das einzufüllende Volumen auf der Basis des Gewichts der einzufüllenden Substanz (120) und einer Massendichte der Substanz (120) bestimmt (205) wird.

6. Verfahren (200) nach einem der vorangehenden Ansprüche, wobei ein sich im Gefäß (110) einstellender Füllstand in Abhängigkeit eines eingefüllten Volumens bestimmt (220) wird.

7. Vorrichtung (105) zur Vereinfachung einer Bemessung einer Substanz, insbesondere einer Zutat, beim Zubereiten einer Speise, umfassend:

   - eine optische Abtasteinrichtung (125), die zur Anbringung in einer vorbestimmten Höhe über einem Gefäß (110) eingerichtet ist;
   - wobei die Abtasteinrichtung (125) zur Abtastung eines Innenraums des Gefäßes (110) eingerichtet ist;
   - eine Verarbeitungseinrichtung (130), die dazu eingerichtet ist,
   - eine in ein Gefäß (110) einzufüllenden Substanz basierend auf einem Rezept zu bestimmen;
   - ein in das Gefäß (110) einzufüllendes Volumen der einzufüllenden Substanz zu bestimmen und
   - einen Füllstand zu bestimmen, den das Volumen nach seinem Einfüllen im Gefäß (110) bewirkt; und
   - eine Anzeigeeinrichtung (135) zur Anzeige des bestimmten Füllstands, wobei die Anzeigeeinrichtung als Projektor (135) ausgestaltet ist zur Projektion einer auf den bestimmten Füllstand hinweisenden Marke (140) an eine Wand des Gefäßes (110).

8. Vorrichtung (105) nach Anspruch 7, wobei die Abtasteinrichtung (125) als Tiefenkamera ausgebildet ist, die zur Bestimmung von Entfernungen von Punkten einer Begrenzung des Innenraums von der Tiefenkamera (125) eingerichtet ist.

**Claims**

1. Method (200) for simplifying a measurement of a substance, in particular an ingredient, when preparing a dish, comprising the following steps:

   - providing a recipe;
   - determining a substance to be poured into a vessel (110) on the basis of the recipe;
   - determining (205) a volume to be poured into the vessel (110) of the substance to be poured;
   - optically scanning (210) an interior of the vessel (110) from a predetermined height above the vessel (110);
   - determining (215) a fill level, which the volume causes in the vessel (110) once it has been poured in;
   - displaying (220) the determined fill level, wherein a mark indicating the determined fill level is projected (225) onto a wall of the vessel (110).

2. Method (200) according to claim 1, wherein the vessel (110) is in contact with a worktop (115) and the scanning takes place from a predetermined height (pH) above the worktop (115).

3. Method (200) according to claim 1 or 2, wherein the shape of the interior is determined (215) on the basis of the scanning.

4. Method (200) according to claim 3, wherein the shape of the interior is determined (215) while taking into consideration an object located in the interior.

5. Method (200) according to one of the preceding claims, wherein the volume to be poured in is determined (205) on the basis of the weight of the substance (120) to be poured in and a mass density of the substance (120).

6. Method (200) according to one of the preceding claims, wherein a fill level occurring in the vessel (110) is determined (220) as a function of a volume poured in.

7. Apparatus (105) for simplifying a measurement of a substance, in particular an ingredient, when preparing a dish, comprising:

   - an optical scanning facility (125), which is configured to be attached at a predetermined height above a vessel (110);
   - wherein the scanning facility (125) is configured to scan an interior of the vessel (110);
   - a processing facility (130), which is configured
   - to determine a substance to be poured into a vessel (110) on the basis of a recipe;
   - to determine a volume to be poured into the vessel (110) of the substance to be poured and
   - to determine a fill level, which the volume causes in the vessel (110) once it has been poured in; and
   - a display facility (135) for displaying the determined fill level, wherein the display facility is embodied as a projector (135) for projecting a mark (140) indicating the determined fill level onto a wall of the vessel (110).

8. Apparatus (105) according to claim 7, wherein the scanning facility (125) is embodied as a depth camera, which is configured to determine distances of points of a boundary of the interior from the depth camera (125).

## Revendications

1. Procédé (200) de simplification de la mesure d'une substance, en particulier d'un ingrédient, lors de la préparation d'un mets, comprenant les étapes suivantes :

   - fourniture d'une recette ;
   - détermination d'une substance à verser dans un récipient (110) sur base de la recette ;
   - détermination (205) d'un volume de la substance à verser dans le récipient (110) ;
   - détection optique (210) d'un espace intérieur du récipient (110) d'une hauteur prédéterminée au-dessus du récipient (110) ;
   - détermination (215) d'un niveau de remplissage produit par le volume après qu'on l'a versé dans le récipient (110) ;
   - affichage (220) du niveau de remplissage déterminé, une marque indiquant le niveau de remplissage déterminé étant projetée sur une paroi du récipient (110).

2. Procédé (200) selon la revendication 1, dans lequel le récipient (110) jouxte un plan de travail (115) et la détection d'une hauteur (pH) prédéterminée se fait au-dessus du plan de travail (115).

3. Procédé (200) selon la revendication 1 ou 2, dans lequel la forme de l'espace intérieur est déterminée (215) sur base de la détection.

4. Procédé (200) selon la revendication 3, dans lequel la forme de l'espace intérieur est déterminée (215) en tenant compte d'un objet se trouvant dans l'espace intérieur.

5. Procédé (200) selon l'une des revendications précédentes, dans lequel le volume à verser est déterminé (205) sur base du poids de la substance à verser (120) et celle d'une densité de masse de la substance (120).

6. Procédé (200) selon l'une des revendications précédentes, dans lequel le niveau de remplissage à régler dans le récipient (110) est déterminé (220) en fonction d'un volume y versé.

7. Appareil (105) de simplification de la mesure d'une substance, en particulier d'un ingrédient, lors de la préparation d'un mets, comprenant :

   - un dispositif optique de détection (125), prévu pour le placement à une hauteur prédéterminée au-dessus d'un récipient (110) ;
   - le dispositif de détection (125) étant prévu pour la détection d'un espace intérieur du récipient (110) ;
   - un dispositif de traitement (130) prévu pour
   - déterminer une substance à verser dans un récipient (110) sur base d'une recette ;
   - déterminer un volume, de la substance à verser, à verser dans le récipient (110) et
   - déterminer un niveau de remplissage produit par le volume après qu'on l'a versé dans le récipient (110) ; et
   - un dispositif d'affichage (135) qui indique le niveau de remplissage déterminé, le dispositif d'affichage étant réalisé en tant que projecteur (135) pour la projection d'une marque (140) indiquant le niveau de remplissage déterminé sur une paroi du récipient (110).

8. Appareil (105) selon la revendication 7, dans lequel le dispositif de détection (125) est réalisé en tant que caméra de profondeur servant à déterminer les distances, par rapport à la caméra de profondeur (125), de points d'une délimitation de l'espace intérieur.

**Fig. 1**

200

| 205 |
|-----|

| 210 |
|-----|

| 215 |
|-----|

| 220 |
|-----|

| 225 |
|-----|

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9460562 B2
- EP 3026404 A2